# EUROPÄISCHE PATENTSCHRIFT

(11) **EP 4 012 991 B1**
(45) Veröffentlichungstag und Bekanntmachung des Hinweises auf die Patenterteilung: **06.09.2023**
(21) Anmeldenummer: 20213595.0
(22) Anmeldetag: 11.12.2020
(51) Int. Cl.: H04L 47/22, H04L 43/0876, H04L 12/14, H04M 15/00, H04W 4/24

(54) **VERFAHREN ZUM ERFASSEN UND VERARBEITEN EINES ZÄHLSIGNALS**
METHOD FOR DETECTING AND PROCESSING A COUNTING SIGNAL
PROCÉDÉ DE DÉTECTION ET DE TRAITEMENT D'UN SIGNAL DE COMPTAGE

(43) Veröffentlichungstag der Anmeldung: 15.06.2022
(73) Patentinhaber: Deutsche Telekom AG, 53113 Bonn (DE)
(72) Erfinder: ZIMBER, Andreas Ernst Marius, 64807 Dieburg (DE); KUNDEL, Ralf, 64289 Darmstadt (DE)
(74) Vertreter: Braun-Dullaeus Pannen Emmerling Patent- & Rechtsanwaltspartnerschaft mbB

(56) Entgegenhaltungen:
- CN-C- 100 466 622
- US-A1- 2007 008 887
- US-A1- 2020 359 244
- CHENGCHEN HU ET AL: "Discount counting for fast flow statistics on flow size and flow volume", IEEE /ACM TRANSACTIONS ON NETWORKING, IEEE / ACM, NEW YORK, NY, US, Bd. 22, Nr. 3, 1. Juni 2014 (2014-06-01), Seiten 970-981, XP058058146, ISSN: 1063-6692, DOI: 10.1109/TNET.2013.2270439

## Beschreibung

Die Erfindung betrifft ein Verfahren zum Erfassen und Verarbeiten zweier Zählsignale, welche einem Datenpaket zugeordnet werden, das im Verlaufe seines Datenpfades einen Internetzugangspunkt durchläuft.

Internetanbieter, wie beispielsweise die Deutsche Telekom, müssen Netzwerkpakete auf dem Weg zu ihrem Kunden Queuen bzw. Shapen. Datenpakete werden hierzu bei der kabelgebundenen Übertragung in einem Broadband Network Gateway (BNG) kurz zwischengespeichert ("gequeued"). Diese Internetzugangspunkte speisen den Datenverkehr der Endbenutzer-Verbindungen in das Backbone-Netzwerk ein und umgekehrt. In diesem Zusammenhang stellt ein Hierarchical Quality of Service (HQoS) queueing Algorithmus sicher, dass alle Pakete die hinter der Queue gezählt wurden, auch tatsächlich beim Kunden zugestellt werden. Nach der Zwischenspeicherung werden die Datenpakete mit einer konstanten Datenübertragungsrate über das jeweilige Zugangsnetzwerk zum Residential Gateway des jeweiligen Nutzers, beispielsweise einem Modem wie einem Speedport oder einer FRITZ!Box geschickt. Dies kann beispielsweise mittels einer Optical Lane Line Termination (OLT) oder einem Multi-Service Access Node (MSAN) erfolgen.

Bei einer alternativen Übertragung von Datenpaketen per Mobilfunk, beispielsweise über 5G, wird das Queuen bzw. Shapen der Datenpakete statt vom BNG von einer User Plane Funktion (UPF) übernommen.

Aufgrund von regulatorischen Vorschriften ist es erforderlich, dass alle Datenpakete vor und hinter dem Queueing gezählt werden. Dieses Zählen von Datenpaketen muss für jeden Kunden individuell erfolgen. Dabei werden unterschiedliche Arten von Datenpaketen (Services) durch unterschiedliche Zähler (Counter) gezählt.

Beispielsweise wird Voice over IP (VoIP) Verkehr in einem anderen Counter gezählt als "normaler" Internetverkehr. Zusätzlich wird nicht nur die Anzahl der Pakete gezählt, sondern auch deren Größe, damit diese für jeden Counter zusätzlich auf-akkumuliert werden kann. Durch das Auswerten dieser Counter lassen sich die Fragen beantworten: "Wie viel Datenvolumen hat der Endkunde xy zu welchem Zeitpunkt für welchen Service verbraucht und wieviel Datenpakete wurden für den Endkunden XY durch das Queueing verworfen?".

In der Gesamtheit ergibt sich also eine große Menge an Countern, die innerhalb eines BNG oder einer eine UPF gezählt werden müssen. Dies kann anhand einer Beispielsrechnung für ein BNG erläutert werden: Ausgehend von 20.000 am BNG angeschlossenen Nutzern werden für jeden Nutzer 12 Arten von Datenpaketen, also Services erfasst und in jeweils einem dafür bestimmten Counter gezählt, zusätzlich erfasst ein 13. Counter die Gesamtheit aller Services. Die Datenpakete müssen nicht nur in der Downstream Richtung, der Richtung zum Nutzer hin, sondern auch im Upstream erfasst werden. Zusätzlich erfolgt ein Zählen der Datenpakete vor und hinter dem Queueing, ein mögliches weiteres Zählen auch währenddessen wird in diesem Beispiel außer Acht gelassen. In diesem Beispiel ergibt sich aus 20.000*13*2*2 = 1,04 Millionen Counter, die für die jeweiligen Services die Anzahl der Datenpakete und die Anzahl der übertragenen Bytes speichern. Im Mobilfunk-Kontext, also bspw. bei einer "5G UPF", kann diese Zahl noch deutlich höher sein.

Unter der Annahme das ein Counter (Datenpakete + Bytes) mindestens 64 Bit groß ist, lässt sich für die beispielhaft berechnete Zahl der Counter ein Speicherbedarf von etwa 8 Megabyte abschätzen.

Diese Counter müssen sehr schnell erhöht werden, um mit der Übertragungsgeschwindigkeit mithalten zu können. Bei einer Übertragungsrate von 100 Gbit/s und einer durchschnittlichen Paketgröße von 1000 Byte sind das 12,5 Millionen Pakete pro Sekunde. Da nicht nur die Anzahl der Datenpakete, sondern auch deren Größe erfasst werden, verdoppelt sich dieser Wert noch einmal, so dass 25 Millionen Einträge pro Sekunde in den Countern inkrementiert werden Ein entsprechendes Countersystem wird in "Discount counting for fast flow statistics on flow size and flow volume" von Chengchen Hu et al. in IEEE /ACM transactions on networking 2014 aufgezeigt.

Diese Erfindung stellt sich die Aufgabe, ein gattungsgemäßes Verfahren vorzuschlagen, welches in der Lage ist, Zählsignale einer hohen Zahl von durchlaufenden Datenpaketen für eine Vielzahl von Nutzer verlustfrei zu erfassen und zu verarbeiten. Des Weiteren stellt sie sich die Aufgabe, ein für die Durchführung des Verfahrens geeignetes System vorzuschlagen

Diese Aufgabe wird gelöst durch ein Verfahren mit den Merkmalen des Anspruchs 1 und einem Counter-Subsystem gemäß Anspruch 9.

Einige besonders bevorzugte Ausführungen werden in den jeweils abhängigen Ansprüchen gefasst. Ein wesentlicher Kerngedanke des erfindungsgemäßen Verfahrens ist, das Zählsignal an ein außerhalb des Datenpfades des Datenpaketes angeordnetes Counter-Subsystem zu übermitteln und es dort zu verarbeiten.

Ein besonderer Vorteil des erfindungsgemäßen Verfahrens ist, dass nur das Auslösen des Zählsignals synchron zum Datenfluss der Datenpakete erfolgen muss. Die darauf folgenden Verfahrensschritte, das Erfassen und das Verarbeiten der Zählsignale, erfolgen außerhalb des Datenpfades und somit unabhängig vom Datenpfad und dessen Übertragungsgeschwindigkeit. Das erfindungsgemäße Verfahren ist auf diese Weise sehr flexibel in der Abarbeitung und muss nur im Mittelwert schnell genug sein. Das ansonsten notwendige Einhalten einer harten zeitlichen Schranke für jedes Datenpaket ist nicht erforderlich. Das erfindungsgemäß außerhalb des Datenpfades angeordnete Counter-Subsystem bietet hierfür die benötigten Voraussetzungen.

Der Inhalt der Zählsignale wird hierfür an eine außerhalb des Datenpfads des Datenpaketes liegende funktionale Einheit, das Counter Subsystem, gesendet. Diese funktionale Einheit befindet sich vorzugsweise innerhalb desselben Chips (beispielsweise ein FPGA oder ASIC) wie der des QoS Processing System. Ein ebenfalls in dem BNG angeordnetes Packet Processing System und das QoS Processing System kann, muss aber nicht, in demselben Chip realisiert sein.

In einer besonders vorteilhaften Ausführungsform weist das Counter-Subsystem einen Cache auf, in den die jeweils letzten der vom Counter-Trigger übermittelten Zählsignale gespeichert werden und wobei aus dem Cache verdrängte Zählsignale in einen Datenspeicher übertragen werden, in welchem die für die Datenpakete indizierten Counter gespeichert werden.

Ein weiteres Merkmal des erfindungsgemäßen Verfahren ist es somit, bei der Speicherung der Zählsignale zwischen einem Cache, also einem nur kleinen aber schnellen Speichermedium, und einem Datenspeicher mit einem entsprechend großen, aber vergleichsweise langsameren Speichermedium, zu unterscheiden. Zur besseren Unterscheidung wird dieser Datenspeicher, in dem alle für die Datenpakete indizierten Counter gespeichert werden, im Weiteren auch als "Full Counter Memory" bezeichnet.

Das erfindungsgemäße Counter-Subsystem umfasst, insbesondere besteht aus einem Cache sowie einem Full Counter Memory. Der Cache beinhaltet dabei nur die zuletzt genutzten Counter, wohingegen der Full Counter Memory alle Counter abbildet. Diese Aufteilung ist vorteilhaft, da typischerweise immer nur ein kleiner Teil, beispielsweise 5 % aller möglichen Services, für einen Großteil, beispielsweise 90 % aller gesendeter Datenpakete verantwortlich ist.

Eine für die erforderliche Speicher-Geschwindigkeit des Cache geeignete Speichertechnologie ist das static random access memory (SRAM). Ein SRAM-Speicherbaustein ist vergleichsweise klein (auch teure Chips haben <50 MB), jedoch kann dieser in einen Prozessor oder Netzwerk Switch Chip, sogenannte applicationspecific integrated curcuits "ASIC" oder filed programmable gate arrays "FPGA" integriert werden und bietet sehr geringe Zugriffszeiten. Ein SRAM ist somit ein gutes Beispiel für einen kleinen HochgeschwindigkeitsspeicherDieser Speicher kann und wird auch als externer Chip, ebenfalls mit kleiner Speichergröße, verwendet werden. In der Praxis die Realisierung der Counter in SRAM jedoch ein limitierender Faktor für die maximale Anzahl an Kunden auf einem Internetzugangspunkt , da zu wenig Speicherplatz verfügbar ist.

Eine Alternative hierzu ist das dynamic random access memory (DRAM) oder das High Bandwidth memory (HBM). Ein solcher vergleichsweise langsamer Hochkapazitätsspeicher wird meist separat von dem verwendeten Prozessor oder ASIC verbaut, da dieser technologisch einen unterschiedlichen Herstellungsprozess hat. Es gibt jedoch auch Ansätze, zwei verschiedene Chips (Prozessor und DRAM) in ein Gehäuse zu verbauen, wie es beispielsweise im High Bandwidth Memory (HBM) implementiert ist. Generell sind DRAM Speicherbausteine vergleichsweise groß (> 4GB, wie beispielsweise üblich bei DDR4) jedoch sind die Zugriffszeiten, also die Zeit, bis eine Information dort abgespeichert bzw. eine darin gespeicherte Information zur Verfügung steht, vergleichsweise hoch. Erschwerend kommt hinzu, dass diese Speicherbausteine nur dann eine hohe Bandbreite haben, wenn große Datenmengen in zusammenhängenden Stücken gelesen oder geschrieben werden. Würde DRAM zur Speicherung der Zählsignale verwendet, kann dies bei der oben beschriebenen Eingangsgeschwindigkeit und Größe der Zählsignale zu einem Überlauf der Speicherbausteine und somit zum Verwerfen von Zählsignalen führt.

Somit ist es von Vorteil, wenn die Zählsignale im Cache in einem SRAM Speicher gespeichert werden. Hingegen ist für den Datenspeicher des Full Counter Memory kein SRAM erforderlich. Für die Funktion des Full Counter Memory reicht es aus, wenn die Zählsignale in einem vergleichsweise langsamen, aber kostengünstigeren DRAM Speicher gespeichert werden.

Ein besonderer Vorteil des Verfahrens ist, dass das Full Counter Memory ausschließlich durch das Counter-Subsystem angesprochen wird. Hierdurch kann auf ein "Write-Through" Schreibverfahren verzichtet werden. Bei diesem Schreibverfahren würde jeder neue geschriebene Wert nicht nur im Cache, sondern auch im Full Counter Memory geschrieben werden. Ein "Write Back" Ansatz ist hier ausreichend. Dieses Verfahren hat den Vorteil, dass Lesezugriffe nach wie vor schnell sind, der Wert im Full Counter Memory jedoch auch immer aktuell ist. Das Auslesen der Counter wird vorzugsweise durch eine Control Plane über das Counter Subsystem durchgeführt, welches dann den jeweiligen korrekten Wert, entweder aus dem Full Counter Memory oder dem Cache, zurück liefert.

Von Vorteil ist es auch, wenn die Zählsignale vor der Verarbeitung in dem Counter-Subsystem in einem First in First out Speicher (FiFo) gepuffert werden. Dies ermöglicht es dem Counter-Subsystem, Verarbeitungsspitzen noch besser abzufedern, da nur im Mittel der geforderte Durchsatz erreicht werden muss.

Ein besonders bevorzugtes Ausführungsbeispiel eines erfindungsgemäßen Counter-Subsystems und dessen Interaktion mit seiner Umgebung in einem BNG wird anhand der folgenden Figuren genauer beschrieben.

Hierbei zeigt:
- Figur 1: Die Grundzüge eines BNG gemäß dem Stand der Technik;
- Figur 2: Eine detailliertere Darstellung eines QoS Processing System und ein erfindungsgemäßes Counter Subsystem;
- Figur 3: Einen Ausschnitt des in Figur 2 gezeigten QoS Processing Systems zusammen mit weiteren Einzelheiten des erfindungsgemäßen Counter Subsystems.

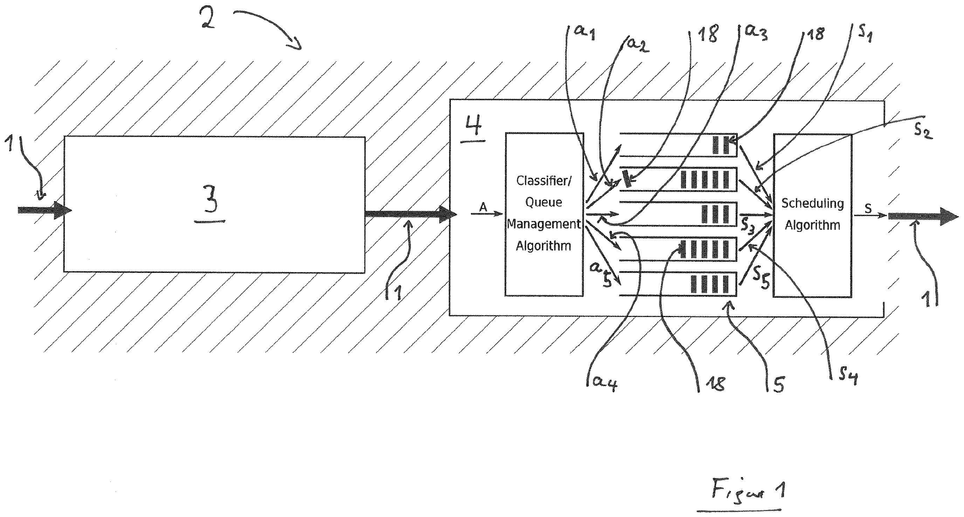

Auf ihrem in Figur 1 gezeigten Datenpfad 1 durch das Netzwerk durchlaufen die Datenpakete ein BNG 2. Dort werden sie zunächst durch ein Packet Processing System 3 bearbeitet und anschließend an ein QoS Processing System 4 weitergegeben. Eingehende (Pfeil A) Datenpakete werden spätestens im QoS Processing System 4 und/ oder im Packet Processing System 3 von einem Classifier verarbeitet. Nach der Klassifizierung der Datenpakete wird von einem Counter-Trigger ein Zählsignal ausgelöst, welches die folgenden Informationen beinhaltet: die aufgrund der Klassifizierung zugewiesene counter-ID des Datenpaketes und dessen Größe. Ein Queue Management Algorithm bestimmt für jedes der Datenpakete dessen weiteren Weg a₁- a₅. Jedes der Datenpakete 18 werden dann in der im zugeordneten Queue der Queues 5 durch das QoS Processing System 4 gequeued, eventuell aber auch verworfen. Sofern das Datenpaket 18 nicht verworfen wurde, wird nach dem Queueing erneut ein Zählsignal erzeugt. Hierbei ist die Größe des Datenpaketes 18 gleich geblieben, jedoch die Counter-ID ist verändert, da ein anderer Counter erhöht werden soll. Vor dem Verlassen (Pfeil S) des QoS Processing Systems 4 werden die gequeueten Datenpakete 18 zudem wieder zusammengeführt s₁ - s₅ und im Scheduling Algorithm verarbeitet.

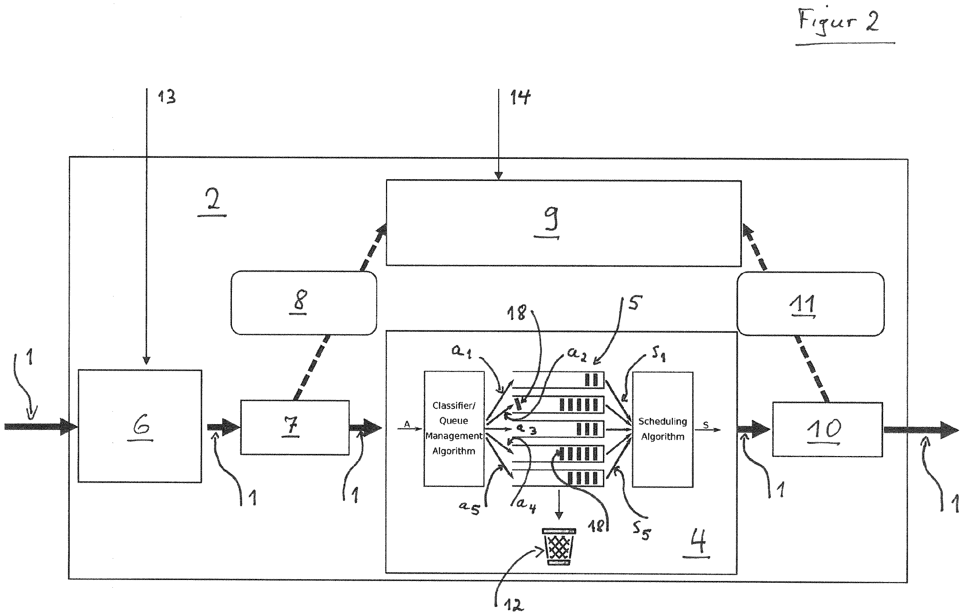

Dies wird in der mit Figur 2 gezeigten detaillierteren Darstellung des QoS Processing Systems 4 dargestellt. Auf ihrem Datenpfad 1 werden die Datenpakete 18 in einem Classifier 6 klassifiziert und an den Counter Trigger 7 weitergereicht. Der Classifier 6 bestimmt für jedes Paket eine oder mehrere Counter-ID(s), wodurch verschiedene Counter indiziert werden können. Der vor den Queues 5 angeordnete erste Counter Trigger 7 löst ein erstes Zählsignal 8 aus, sobald ein Datenpaket 18 durch ihn durchgereicht bzw. verarbeitet wird. Dieses erste Zählsignal 8 beinhaltet, insbesondere besteht aus den folgenden Informationen: Die zuvor vom Classifier ermittelte Counter-ID, z.B.: 1234, und die Größe des Datenpaketes, z.B. 1111 Bytes.

Das erste Zählsignal 8 wird an das Counter Subsystem 9 übermittelt, welches den eigentlichen Zählvorgang durchführt, den bisherigen Wert für diesen Counter um den in dem ersten Zählsignal 8 genannten Wert zu erhöhen und die in dem ersten Zählsignal genannte Größe des Datenpakets 18 zu dem bisher für diesen Counter gezählten Datenvolumen zu addieren.

Ein nach der Queues 5 angeordneter zweiter Counter Trigger 9 löst ein zweites Zählsignal 10 aus, wobei die vom Classifier 6 ermittelte Counter-ID des Datenpaketes 18 hier vorzugsweise statisch modifiziert wird, beispielsweise indem die Counter ID des ersten Zählsignals 8 in dem zweiten Zählsignal 10 mit "1" addiert wird. Für das genannte Beispiel des ersten Zählsignals 8 wäre somit im zweiten Zählsignal 10 die übermittelte Counter-ID 1235, während die Größe des Datenpaketes 18 unverändert 1111 Bytes beträgt.

Der erste Counter Trigger 7 und zweite Counter Trigger 10 sollen aus Performance Gründen so einfach wie möglich gehalten werden, da sie innerhalb des Datenpfads liegen. Jedes Datenpaket wird in diesem Ausführungsbeispiel somit in der Regel zwei Mal gezählt, einmal vor den Queues 5 und einmal dahinter. Eine Ausnahme ist der Fall eines mit 12 gezeigten Paketverlustes, welcher typischerweise <1 % beträgt. Das Erfassen und Verarbeiten des ersten Zählsignals 8 bzw. des zweiten Zählsignals 11 erfolgt außerhalb des Datenpfades, was durch die beiden gestrichelten Pfeile zwischen den Counter Triggern 7 und 10 und dem Counter Subsystem 9 hervorgehoben wird.

Befindet sich der erste Counter Trigger 7 außerhalb des QoS Processing Systems 4, also beispielsweise im Packet Processing System 3, so werden zwei Counter-Subsysteme benötigt - eins je Chip beziehungsweise je System.

Die Information, welcher Counter erhöht werden soll, wird durch hier nicht gezeigte eine Control Plane in Form von Tabelleneinträgen in eine Lookup-Table in den Classifier 6 geschrieben, dessen Funktion besser noch als Queue&Counter-Classifier bezeichnet werden kann. Diese Vorgabe wird mit dem Pfeil 13 gezeigt. Ein hierfür geeigneter Beispieleintrag könnte sein: Destination-IP == 1.2.3.0/24 counter_id=11833.

Der Datenpfad 1 der Datenpakete 18 wird in Folge nicht durch die Counter und deren Erfassung bzw. Verarbeitung beeinflusst. Das Zählsignal 8, 10 wird somit abgesendet, es wird aber nie eine Information vom Counter Subsystem 9 zurück in die Data Plane, welche die Datenpakete 18 verarbeitet, gesendet. Dadurch können die Counter asynchron zu der Data Plane bzw. dem Datenfluss bearbeitet werden

Die Counter können ebenfalls asynchron von der Control Plane ausgelesen werden, was in der Figur 2 durch den Pfeil 14 gezeigt wird. Nachdem ein Counter ausgelesen wurde, wird dieser auf 0 gesetzt, da die absolute Summe in der Control Plane berechnet wird. Dadurch werden Überläufe respektive Overflows der Counter in der Hardware vermieden.

Zusätzlich kann das Counter Subsystem ) auch proaktiv darüber informieren, dass ein bestimmter Counter, beispielsweise mit der ID 1234, einen Threshold Füllstand überschritten hat und zeitnah ausgelesen werden sollte. Ein hierfür geeigneter Threshold Füllstand könnte im Bereich von 90% liegen.

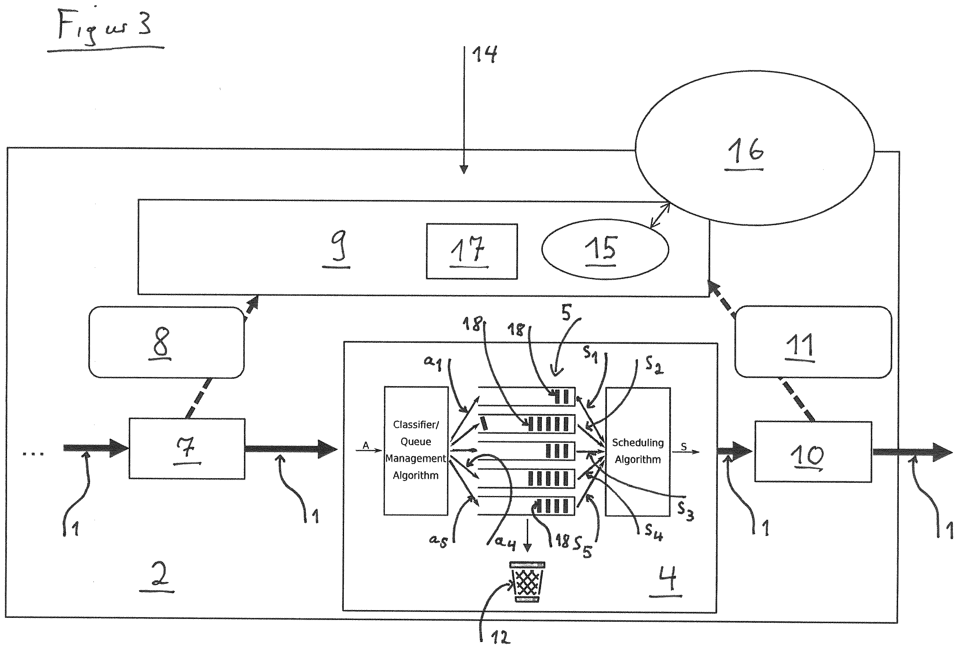

In der weiter fokussierten Figur 3 wurden zusätzliche Einzelheiten des Counter-Subsystem ergänzt, die im Folgenden beschrieben werden. Das hier gezeigte Counter-Subsystem 9 weist einen Cache 15 sowie einen Full Counter Memory 16 auf welche über eine Schnittstelle 17 miteinander verbunden sind. Das Full Counter Memory 16 muss nicht innerhalb des Counter-Subsystems 9 angeordnet sein und kann als externes DRAM, beispielsweise DDR4 Memory ausgebildet sein.

Der Cache 15 beinhaltet nur die zuletzt genutzten Counter wohingegen das full counter memory 16 alle Counter abbildet und nur die vom Cache 15 abgeworfenen Counter einliest. Die Verarbeitung der Zählsignale erfolgt vorzugsweise nach den folgenden Verfahrensregeln: Jedes im Counter Subsystem 9 eingehende Zählsignal 8, 11 führt zu einer Erhöhung des bzw. der ihm zugeordneten Counter. Dazu sind folgende Schritte nötig: Der bisherige Counter Wert des angesprochenen Counters wird ausgelesen, so dass für diesen die bisherige Anzahl der Datenpakete und die hierzu gespeicherte bisherige Anzahl der Bytes bearbeitet werden können. Diese Werte werden um die Werte des Zählsignals inkrementiert, also formelhaft geschrieben: neue #Pakete = #Pakete + 1 und neue Totale_ Anzahl_Bytes = bisherige Totale_ Anzahl_Bytes + Anzahl_Bytes aus dem Zählsignal. Anschließend erfolgt ein Rückschreiben der beiden Werte (neue #Pakete + neue Totale_ Anzahl_Bytes) in den Cache.

Ein Cache wie der Cache 15 profitiert generell von sogenannten Lokalitätseigenschaften. Dabei wird unterschieden zwischen:
Räumlicher Lokalität: Hierbei geht man davon aus, dass Daten die im Speicher nahe zusammen liegen auch häufig zeitnah hintereinander zugegriffen werden. Beispielsweise ist es wahrscheinlich, wenn man auf ein Objekt "Person" im Speicher zunächst auf den Namen zugreift, dass kurz darauf auch dessen alte Adresse, ... gelesen wird. Ein Prozessorcache liest somit Daten immer in Blöcken aus dem Datenspeicher in den Cache ein, um eine höhere Effizienz zu erreichen. Die Größe dieser Blöcke nennt sich Blocksize.

Zeitliche Lokalität: Diese besagt, dass es wahrscheinlich ist, dass auf Daten, auf die zugegriffen wurde, in naher Zukunft wieder zugegriffen wird.

Im konkreten Anwendungsfall ist für den counter nur eine sehr bedingte räumliche Lokalität gegeben. Zwar wird ein Datenpaket 18 sowohl vor als auch hinter den Queues 5 in zwei verschiedenen Countern gezählt, in dem genannten Beispiel mit den Counter-ID's 1234 und 1235. Dadurch bietet sich eine Blockgröße von 2 Countern an, so das je Datenpaket 18 im worst case nur ein Lesezugriff auf das Full Counter Memory 16 nötig ist, durch den immer gleich beide Counter gelesen werden. Eine größere räumliche Lokalität existiert in diesem Zusammenhang nicht.

Zeitliche Lokalität ist hingegen sehr stark gegeben. Während ein BNG oder eine UPF viele tausend Nutzer respektive Endkunden terminiert, kann davon ausgegangen werden, dass nur ein kleiner Teil von diesen in einem Zeitraum viele Daten schicken. Diese aktiven Nutzer werden durch einen Caching Mechanismus des Cache 15 dann automatisch in dem schnellen Speicher des Cache 15 gezählt. Erst wenn dieser Cacheeintrag verdrängt wird, beispielsweise weil der Endkunde nicht mehr aktiv ist, wird einmal der Wert in das Full Counter Memory 16 geschrieben.

Als vorteilhafte Verdrängungsstrategie nicht nur für die zum Cache 15 gehörende Cache Logic 17 des bevorzugten Ausführungsbeispiels bietet sich ein Least recently used (LRU) in Kombination mit einem n-Wege satzassoziativen Cache an. Das bedeutet das ein Counter Eintrag in einem von n (bspw. 4 oder 8) "Wegen" gespeichert werden kann. Sofern alle 4 Wege belegt sind, wird der Weg verdrängt, der am längsten kein Counter Update gesehen hat. Ist n zu klein gewählt, beispielsweise n = 2, ist die Wahrscheinlichkeit hoch, dass zufällig ein "aktiver Nutzer" verdrängt wird, weil ein "passiver Nutzer" kurz zuvor nur ein einzelnes Datenpaket empfangen hat, beispielsweise ein "Ich lebe noch"-Paket, dass immer wieder zwischen BNG 2 und Residential Gateway hin und her geschickt wird. Ein größeres n, beispielsweise n > 12, ist zwar theoretisch vorteilhaft, führt aber zu massiven Probleme bei der praktischen Realisierung, insbesondere des Chip Designs.

Die hier beschriebenen Merkmale des Counter-Subsystems in einem BNG als Internetzugangspunkt können auch in einer UPF des 5G Standards Anwendung finden, sie generieren dort ebenfalls die im Umfeld des BNG beschriebenen Vorteile. Entsprechend gelten sie für Einheiten, welche die Funktion eines BNG oder einer UPF in nachfolgenden Standards übernehmen, beispielsweise in 6G.

## Patentansprüche

1. Verfahren zum Erfassen und Verarbeiten zweier Zählsignale, welche einem Datenpaket (18) zugeordnet werden, das im Verlaufe seines Datenpfades (1) einen Internetzugangspunkt wie ein Broadband Network Gateway, BNG (2) oder eine User Plane Funktion, UPF, durchläuft, wobei je ein Zählsignal von einem Counter-Trigger (7, 10) generiert wird, der im Datenpfad (1) des Datenpakets (18) vor und nach der Zwischenspeicherung des Datenpaketes (18) in einem QoS-Processing System (4) des Internetzugangspunktes angeordnet ist, wobei jedes Zählsignal eine Information über eine Paketgröße und eine Counter-ID des Datenpakets (18) umfasst und wobei jedes Zählsignal in einem für die jeweilige Counter-ID indizierten Counter gespeichert wird, und wobei jedes Zählsignal an ein außerhalb des Datenpfades (1) des Datenpaketes (18) angeordnetes Counter-Subsystem (9) übermittelt und dort verarbeitet wird.

2. Verfahren nach nach Anspruch 1, wobei das Counter-Subsystem (9) einen Cache (15) aufweist, in den die jeweils letzten der vom Counter-Trigger (7, 10) übermittelten Zählsignale gespeichert werden und wobei aus dem Cache (15) verdrängte Zählsignale in ein Full Counter Memory (16) übertragen werden, in welchem die für die Paketarten indizierten Counter gespeichert werden.

3. Verfahren nach Anspruch 2, wobei die Zählsignale im Cache (15) in einem kleinen Hochgeschwindigkeitsspeicher, insbesondere einem SRAM Speicher gespeichert werden.

4. Verfahren nach Anspruch 2 oder 3, wobei die Zählsignale im Full Counter Memory (16) in einem langsamen Hochkapazitätsspeicher, insbesondere einem DRAM oder HBM Speicher gespeichert werden.

5. Verfahren nach einem der Ansprüche 2 bis 4, wobei das Counter-Subsystem (9) das Full Counter Memory (16) mittels eines Write Back Schreibverfahrens anspricht.

6. Verfahren nach einem der Ansprüche 2 bis 5, wobei als Verdrängungsstrategie für eine Cache Logic (17) ein Counter Eintrag in einem von n Wegen gespeichert wird, wobei der Weg verdrängt wird, der am längsten kein Counter Update gesehen hat, wenn alle n Wege belegt sind.

7. Verfahren nach einem der Ansprüche 1-6, wobei das Counter-Subsystem asynchron zur Übertragungsrate des Datenpfads (1) betrieben werden.

8. Verfahren nach Anspruch 7, wobei die Zählsignale vor der Verarbeitung in dem Counter-Subsystem in einem Fifo-Speicher gepuffert werden.

9. Counter-Subsystem zur Durchführung eines Verfahren nach einem der Ansprüche 1 bis 8, wobei das Counter Subsystem (9) eine außerhalb eines Datenpfads (1) eines Datenpaketes (18) liegende funktionale Einheit eines Internetzugangspunkts, wie eines Broadband Network Gateway, BNG (2) oder einer User Plane Funktion, UPF, ist.

10. Counter-Subsystem nach Anspruch 9, wobei das Counter-Subsystem (9) innerhalb desselben Chips wie der eines QoS Processing Systems (4) des BNG (2) oder der UPF angeordnet ist.

11. Counter-Subsystem nach einem der Ansprüche 9 oder 10, wobei das Counter-Subsystem (9) mit einem dem QoS Processing Systems (4) zugeordneten Counter Trigger (7, 10) verbunden ist.

## Claims

1. A method for detecting and processing two counting signals, which are assigned to a data packet (18) that in the course of its data path (1) passes through an internet access point such as a Broadband Network Gateway, BNG (2), or a User Plane Function, UPF, wherein one counting signal each is generated by a counter trigger (7, 10) arranged before and after the caching of the data packet (18) in a QoS processing system (4) of the internet access point in the data path (1) of the data packet (18), wherein each counting signal contains information about a packet size and a counter ID of the data packet (18), and wherein each counting signal is stored in a counter indexed for the respective counter ID, and wherein each counting signal is forwarded to a counter subsystem (9) arranged outside the data path (1) of the data packet (18) and is processed there.

2. The method according to Claim 1,
wherein the counter subsystem (9) includes a cache (15), in which the last of each of the counting signals forwarded by the counter triggers (7, 10) are stored, and wherein counting signals displaced from the cache (15) are transferred to a full counter memory (16), in which the counters indexed for the packet types are stored.

3. The method according to Claim 2,
wherein the counting signals in the cache (15) are stored in a small high-speed memory, in particular a SRAM memory.

4. The method according to Claim 2 or 3,
wherein the counting signals in the full counter memory (16) are stored in a slow, high-capacity memory, in particular a DRAM or HBM memory.

5. The method according to any one of Claims 2 to 4,
wherein the counter subsystem (9) addresses the full counter memory (16) using a write back method.

6. The method according to any one of Claims 2 to 5,
wherein, as displacement strategy for a cache logic (17), a counter entry is stored in one of n paths, wherein the path that has not undergone a counter update for the longest time when all n paths are occupied is displaced.

7. The method according to any one of Claims 1 to 6,
wherein the counter subsystem is operated asynchronously with respect to the transmission rate of the data path (1).

8. The method according to Claim 7,
wherein the counting signals are buffered in a Fifo memory before processing in the counter subsystem.

9. A counter subsystem for carrying out a method according to any one of Claims 1 to 8, wherein the counter subsystem (9) is a functional unit of an internet access point such as a Broadband Network Gateway, BNG (2), or a User Plane Function, UPF, which is located outside a data path (1) of a data packet (18).

10. The counter subsystem according to Claim 9,
wherein the counter subsystem (9) is located in the same chip as that of a QoS processing system (4) of the BNG (2) or the UPF.

11. The counter subsystem according to Claim 9 or 10,
wherein the counter subsystem (9) is connected to a counter trigger (7, 10) that is assigned to the QoS processing system (4).

## Revendications

1. Procédé de détection et de traitement de deux signaux de comptage, qui sont affectés à un paquet de données (18), qui sur le cours de son trajet de données (1) passe par un point d'accès Internet tel qu'une passerelle réseau large bande, BNG (2) ou une fonction de plan d'utilisateur, UPF, dans lequel un signal de comptage est généré par un déclencheur de compteur (7, 10), qui est disposé dans le trajet de données (1) du paquet de données (18) avant et après la mémorisation intermédiaire du paquet de données (18) dans un système de traitement QoS (4) du point d'accès Internet, dans lequel chaque signal de comptage comprend des informations concernant une taille de paquet et un ID de compteur du paquet de données (18) et dans lequel chaque signal de comptage est mémorisé dans un compteur indexé pour l'ID de compteur respectif, et dans lequel le signal de comptage est transmis à un sous-système de compteur (9) agencé à l'extérieur du trajet de données (1) du paquet de données (18) et traité là-bas.

2. Procédé selon la revendication 1, dans lequel le sous-système de compteur (9) comporte une antémémoire (15), dans lequel le dernier des signaux de comptage transmis par le déclencheur de compteur (7, 10) est mémorisé et dans lequel provenant des signaux de comptage déplacés de l'antémémoire (15) sont transférés vers une mémoire de compteur pleine (16) dans laquelle sont mémorisés les compteurs indexés pour les types de paquets.

3. Procédé selon la revendication 2, dans lequel les signaux de comptage dans l'antémémoire (15) sont mémorisés dans une petite mémoire à grande vitesse, en particulier une mémoire SRAM.

4. Procédé selon la revendication 2 ou 3, dans lequel les signaux de comptage dans la mémoire d compteur pleine (16) sont mémorisés dans une mémoire lente de grande capacité, notamment une mémoire DRAM ou HBM.

5. Procédé selon une quelconque des revendications 2 à 4, dans lequel le sous-système de compteur (9) adresse la mémoire de compteur complète (16) en utilisant un procédé d'écriture réinscriptible.

6. Procédé selon une quelconque des revendications 2 à 5, dans lequel une entrée de compteur est mémorisée dans un des n trajets en tant que stratégie de déplacement pour une logique d'antémémoire (17), dans lequel le trajet qui n'a vu aucune mise à jour de compteur pendant le temps le plus long est déplacé lorsque tous les n trajets sont occupés.

7. Procédé selon une quelconque des revendications 1 à 6, dans lequel le sous-système de compteur est exploité de manière asynchrone au débit de transmission du trajet de données (1).

8. Procédé selon la revendication 7, dans lequel les signaux de compteur sont tamponnés dans une mémoire FIFO avant d'être traités dans le sous-système de compteur.

9. Procédé selon une quelconque des revendications 1 à 8, dans lequel le sous-système de compteur (9) est une unité fonctionnelle d'un point d'accès Internet située à l'extérieur d'un trajet de données (1) d'un paquet de données (18), telle qu'une passerelle de réseau large bande, BNG (2) ou une fonction de plan d'utilisateur, UPF.

10. Sous-système de compteur selon la revendication 9, dans lequel le sous-système de compteur (9) est disposé dans la même puce que celle d'un système de traitement QoS (4) du BNG (2) ou de l'UPF.

11. Sous-système de compteur selon une des revendications 9 ou 10, dans lequel le sous-système compteur (9) est connecté à un système de traitement QoS (4) associé au déclencheur de compteur (7, 10).
